# EUROPEAN PATENT APPLICATION

(11) **EP 4 852 473 A1**
(43) Date of publication of application: **09.12.2026**
(21) Application number: 24929048.7
(22) Date of filing: 14.06.2024
(51) Int. Cl.: H04W 4/80

(54) **INTERACTION METHOD, ELECTRONIC DEVICE, AND COMPUTER-READABLE STORAGE MEDIUM**

(30) Priority: 15.03.2024 CN 202410295238
(71) Applicant: Honor Device Co., Ltd., Shenzhen, Guangdong 518040 (CN)
(72) Inventor: LI, Zhongjin, Shenzhen, Guangdong 518040 (CN); ZHOU, Bin, Shenzhen, Guangdong 518040 (CN); ZHANG, Zhongli, Shenzhen, Guangdong 518040 (CN)
(74) Representative: Henselmann, Alexander Gerhard
(86) International application number: PCT/CN2024/099117
(87) International publication number: WO 2025/189589

(57) **Abstract**

The embodiments of this application provide an interaction method, an electronic device, and a computer-readable storage medium, applied to a first electronic device that communicates with a stylus in a Bluetooth manner. The interaction method includes: obtaining a first request; the first request being a message sent to the first electronic device when the stylus is switched to a writing state, for requesting to shorten a cycle of data transmission with the first electronic device; determining, in response to the first request, a service set in real-time concurrent communication with the first electronic device except handwriting by the stylus; and shortening the cycle of data transmission with the stylus in response to the first request when the service set includes only services corresponding to frequency bands except 2.4 GHz. By shortening the data transmission cycle, the first electronic device can interact with the stylus more quickly, so that information corresponding to a stroke can be transmitted to the first electronic device in time, handwriting displayed on the display screen of the first electronic device can be optimized, and disappearance of strokes can be reduced.

## Description

This application claims priority to Chinese Patent Application No. 202410295238.5, filed with the China National Intellectual Property Administration on March 15, 2024 and entitled "INTERACTION METHOD, ELECTRONIC DEVICE, AND COMPUTER-READABLE STORAGE MEDIUM", which is incorporated herein by reference in its entirety.

### TECHNICAL FIELD

This application relates to the technical field of electronic devices, and specifically, to an interaction method, an electronic device, and a computer-readable storage medium.

### BACKGROUND

A stylus is an input device of an electronic device such as a tablet computer or a smartphone, and may be connected to the electronic device in a Bluetooth manner. The stylus may perform operations such as writing and drawing on a display screen of the electronic device. The degree of thickness of handwriting displayed on the display screen varies depending on different touch pressures.

Currently, when a user performs writing by using a stylus and quickly lifts up the pen tip, the tail end of the handwriting displayed on a display screen is relatively thick and there is no stroke, resulting in degradation of the writing experience of the user.

### SUMMARY

This application provides an interaction method, an electronic device, and a computer-readable storage medium, so that handwriting can be optimized and disappearance of strokes can be reduced.

According to a first aspect, this application provides an interaction method, applied to a first electronic device that communicates with a stylus in a Bluetooth manner. The method includes: obtaining a first request; the first request being a message sent by the stylus to the first electronic device when the stylus is switched to a writing state, for requesting to shorten a cycle of data transmission with the first electronic device; determining, in response to the first request, a service set in real-time concurrent communication with the first electronic device except handwriting by the stylus; and performing data transmission with the stylus in the shortened cycle in response to the first request when the service set includes only services corresponding to frequency bands except 2.4 GHz. Transmitted data includes pressure sensing data, and a degree of thickness of handwriting displayed on the first electronic device is in direct proportion to the pressure sensing data received from the stylus.

By means of this embodiment, when the stylus is in a writing state, the stylus sends, to the first electronic device, a message for requesting to shorten a cycle of data transmission between the stylus and the first electronic device. The first electronic device determines a service set in real-time concurrent communication with the first electronic device except handwriting by the stylus, and performs data transmission with the stylus in the shortened cycle in response to the first request when the service set includes only services corresponding to frequency bands except 2.4 GHz. By shortening the data transmission cycle, the first electronic device can interact with the stylus more quickly, so that information corresponding to a stroke can be transmitted to the first electronic device in time, handwriting displayed on the display screen of the first electronic device can be optimized, and disappearance of strokes can be reduced.

In combination with the first aspect, in some implementations of the first aspect, the method further includes: performing the data transmission with the stylus in the shortened cycle in response to the first request when the service set includes services corresponding to a frequency band of 2.4 GHz and includes only low-bit rate services; the low-bit rate services being services having cycles of data transmission with the first electronic device using the frequency band of 2.4 GHz greater than a first preset value.

By means of the embodiment, the data transmission with the stylus is performed in the shortened cycle when the service set includes services corresponding to the frequency band of 2.4 GHz and includes only low-bit rate services. In this way, impact of such an operation on the low-bit rate services is not significant, and the first electronic device can interact with the stylus more quickly, so that information corresponding to a stroke can be transmitted to the first electronic device in time, handwriting displayed on the display screen of the first electronic device can be optimized, and disappearance of strokes can be reduced.

In combination with the first aspect, in some implementations of the first aspect, the method further includes: sending, to the stylus in response to the first request, a message of disagreeing to adjust the cycle of data transmission between the first electronic device and the stylus when the service set includes services corresponding to the frequency band of 2.4 GHz and the services corresponding to the frequency band of 2.4 GHz include first high-bit rate services; the first high-bit rate services being services having cycles of data transmission with the first electronic device using the frequency band of 2.4 GHz less than a second preset value and having cycles of data transmission with the first electronic device using the frequency band of 2.4 GHz being non-adjustable.

By means of this embodiment, when the service set includes services corresponding to the frequency band of 2.4 GHz and the services corresponding to the frequency band of 2.4 GHz include the first high-bit rate services, in order not to affect the performance of the first high-bit rate services, in the scenario, the cycle of data transmission between the first electronic device and the stylus is not adjusted in response to the first request.

In combination with the first aspect, in some implementations of the first aspect, the method further includes: sending, to a second electronic device, a second request when the service set includes the services corresponding to the frequency band of 2.4 GHz, the services corresponding to the frequency band of 2.4 GHz do not include the first high-bit rate services, the services corresponding to the frequency band of 2.4 GHz include second high-bit rate services, and cycles in which data transmission is currently performed between the second electronic device corresponding to the second high-bit rate services and the first electronic device are not a maximum value among adjustable data transmission cycles, the second request being used for requesting to increase the cycle of data transmission between the second electronic device and the first electronic device; the second high-bit rate services being services having cycles of data transmission with the first electronic device less than a third preset value and having cycles of data transmission with the first electronic device using the frequency band of 2.4 GHz being adjustable.

By means of this embodiment, when the service set includes the services corresponding to the frequency band of 2.4 GHz, the services corresponding to the frequency band of 2.4 GHz do not include the first high-bit rate services, the services corresponding to the frequency band of 2.4 GHz include second high-bit rate services, and cycles in which data transmission is currently performed between the second electronic device corresponding to the second high-bit rate services and the first electronic device are not a maximum value among adjustable data transmission cycles, the second request is sent to the second electronic device, for requesting to increase the cycle of data transmission between the second electronic device and the first electronic device. By means of sending the request for increasing the cycle of the data transmission, negotiation with the second electronic device is performed. By increasing the cycle of transmission for the second electronic device, conflict during use of the frequency band of 2.4 GHz by the second electronic device and the stylus can be increased, and the performance of interaction between the stylus and the first electronic device can be optimized.

In combination with the first aspect, in some implementations of the first aspect, the method may further include: performing the data transmission with the stylus in the shortened cycle in response to the first request when a feedback message from the second electronic in response to the second request is received and the feedback message indicates that the second electronic device agrees to increase the cycle of data transmission with the first electronic device.

By means of this embodiment, when the service set includes the services corresponding to the frequency band of 2.4 GHz, the services corresponding to the frequency band of 2.4 GHz do not include the first high-bit rate services, the services corresponding to the frequency band of 2.4 GHz include second high-bit rate services, and cycles in which data transmission is currently performed between the second electronic device corresponding to the second high-bit rate services and the first electronic device are not a maximum value among adjustable data transmission cycles, the second request is sent to the second electronic device, and information of that the second electronic device agrees to adjust the cycle of communication with the first electronic device is received, so that occupation of resources in the frequency band of 2.4 GHz by the second electronic device can be reduced and the performance of interaction between the stylus and the first electronic device can be optimized.

In combination with the first aspect, in some implementations of the first aspect, the method may further include: sending, to the stylus in response to the first request, a message of disagreeing to adjust the cycle of data transmission between the first electronic device and the stylus when a feedback message from the second electronic device in response to the second request is received and the feedback message indicates that the second electronic device does not agree to increase the cycle of data transmission with the first electronic device.

By means of this embodiment, when the service set includes the services corresponding to the frequency band of 2.4 GHz, the services corresponding to the frequency band of 2.4 GHz do not include the first high-bit rate services, the services corresponding to the frequency band of 2.4 GHz include second high-bit rate services, and cycles in which data transmission is currently performed between the second electronic device corresponding to the second high-bit rate services and the first electronic device are not a maximum value among adjustable data transmission cycles, the second request is sent to the second electronic device, and when information of that the second electronic device does not agree to increase the cycle of communication with the first electronic device, a message that the second electronic device does not agree to adjust the cycle of data transmission between the first electronic device and the stylus is sent to the stylus, so that impact on the performance of transmission of the second electronic device can be reduced.

In combination with the first aspect, in some implementations of the first aspect, the second high-bit rate services include: a call service, a music playback service, a file transmission service, or the like.

The second high-bit rate services can communicate with the first electronic devices in a plurality of communication cycles. Usually, the second electronic device automatically adjusts according to a network state. In this embodiment of this application, the second electronic device may determine whether to perform adjustment according to a request of the first electronic device. For example, in the related technology, when the network state is good, a music playback service may communicate with the first electronic device by using a high-bit rate, and when the network state is poor, the music playback service may communicate with the first electronic device by using a medium bit rate or a low bit rate. By using the technical solution provided in this application, the request can be sent to the second electronic device related to the music playback service, for requesting the second electronic device to increase the cycle of communication with the first electronic device. In response to the request for increasing the communication cycle, the second electronic device may agree or may disagree with same.

In combination with the first aspect, in some implementations of the first aspect, the shortened cycle is less than a cycle of generation of a pressure sensing signal. In this manner, the pressure sensing data generated by the stylus can be transmitted to the first electronic device in time, so that the loss of strokes is reduced. For example, the performing data transmission with the stylus in the shortened cycle includes: performing the data transmission with the stylus using 3.75 milliseconds as the cycle.

According to a second aspect, this application provides an electronic device. The electronic device includes one or more processors and a memory. The memory is coupled to the one or more processors. The memory is configured to store computer program code, the computer program code includes computer instructions, and the one or more processors invoke the computer instructions to cause the electronic device to perform any method in the technical solution described in the first aspect.

According to the third aspect, this application provides a computer-readable storage medium. The computer-readable storage medium includes instructions. The instructions, when run on an electronic device, cause the electronic device to perform any method in the technical solution described in the first aspect.

It is to be understood that the technical features of the technical solutions provided in the second aspect and the third aspect above can all correspond to the interaction method provided in the first aspect and a possible implementation thereof, so that the similar beneficial effects can be achieved. Details are not described herein again.

### BRIEF DESCRIPTION OF DRAWINGS

FIG. 1A is a schematic diagram of raising a stylus during writing on a display screen of an electronic device using the stylus;
FIG. 1B is a schematic diagram of handwriting displayed on a display screen during writing using a stylus in the related technology;
FIG. 1C is a schematic diagram of handwriting displayed on a display screen when an interaction method according to this application is used;
FIG. 2 is a schematic flowchart of an interaction method according to an embodiment of this application;
FIG. 3 is a schematic diagram of an interaction process between a tablet computer and a stylus according to an embodiment of this application;
FIG. 4 is a schematic diagram of an interaction process between a tablet computer and a stylus according to an embodiment of this application;
FIG. 5 is a schematic diagram of an interaction process between a tablet computer and a stylus according to an embodiment of this application;
FIG. 6 is a schematic diagram of an interaction process between a tablet computer, a stylus, and a second electronic device according to an embodiment of this application; and
FIG. 7 is a schematic structural diagram of an electronic device according to an embodiment of this application.

### DESCRIPTION OF EMBODIMENTS

The following describes technical solutions in embodiments of this application with reference to accompanying drawings in embodiments of this application. In the descriptions of embodiments of this application, unless otherwise specified, "/" represents "or". For example, A/B may represent A or B. In this specification, "and/or" describes only an association relationship between associated objects and indicates that three relationships may exist. For example, A and/or B may represent the following three cases: Only A exists, both A and B exist, and only B exists. In addition, in the descriptions of embodiments of this application, "a plurality of" means two or more.

The following terms "first", "second", and "third" are merely used for description, and cannot be understood as an indication or implication of relative importance or an implicit indication of a quantity of indicated technical features. Therefore, features defining "first", "second", and "third" can explicitly or implicitly include one or more of the features.

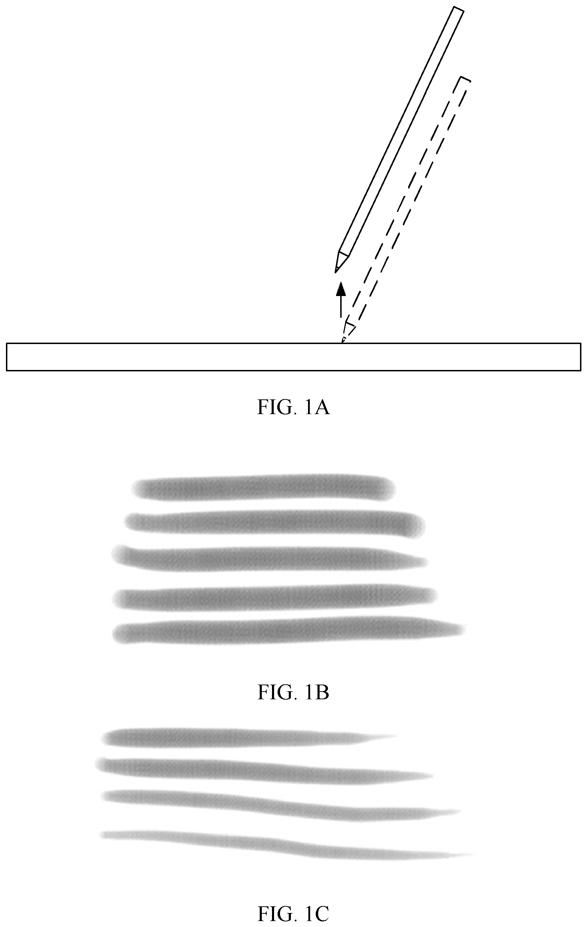

FIG. 1A is a schematic diagram of an application scenario to which an interaction method is applicable according to an embodiment of this application. During writing using a stylus, the stylus moves on a display screen of an electronic device, and the stylus is lifted up after the writing is completed. FIG. 1B shows handwriting displayed on a display screen after a plurality of horizontal lines is written on a surface of an electronic device during interaction between a stylus and the electronic device (such as a tablet computer or a smartphone) in the existing technology. As can be seen from FIG. 1B, when the related technology is used, some strokes at tail ends of handwriting disappear, and some strokes are not significant, which is different from an actual writing target.

Through tests and analysis, research and development personnel have found that the problem shown in FIG. 1B occurs due to the fact that a data transmission cycle does not match a cycle of generation of pressure sensing data during writing using a stylus. A stylus and an electronic device usually communicate with each other in a Bluetooth manner, and use a frequency band of 2.4 GHz. A default cycle of data transmission between a stylus and an electronic device is approximately 11 milliseconds. A cycle of generation of pressure sensing data by writing on a display screen using a stylus is approximately 4 milliseconds. It can be seen that the two cycles do not match each other, and after the stylus is lifted up, data that is not yet transmitted is lost. In particular, when the stylus is lifted up quickly, the loss of a stroke is relatively significant.

The concept of this application includes: given a use scenario and a relatively small impact on other existing services, reducing the cycle of data transmission between the stylus and the electronic device, so that the pressure sensing data generated by the stylus can be transmitted to the electronic device in time, and a line matching received data transmitted by the stylus is displayed on the display screen of the electronic device. In this way, the handwriting displayed on the display screen of the electronic device is optimized and disappearance of strokes is reduced. In some embodiments, after the technical solutions provided in this application are used, the handwriting is shown in FIG. 1C. For example, the cycle of transmission of the stylus may be set to be less than the cycle of generation of the pressure sensing data. The cycle of generation of pressure sensing data by the stylus is usually approximately 4 ms. During use of the technical solution provided in this application, when a particular condition is met, the cycle (for example, a parameter Connection_Interval) in which the stylus transmits data to the electronic device may be changed to 3.75 ms. In this application, private modification is performed on the current BLE protocol (a value range of Connection_Interval in the conventional BLE protocol ranges from 7.5 ms to 4s), and the problem of stroke disappearance can be solved without separately increasing the hardware costs.

The interaction method provided in the embodiments of this application may be applied to an electronic device, such as a mobile phone, a tablet computer, a personal digital assistant (personal digital assistant, PDA), a notebook computer, an ultra-mobile personal computer (ultra-mobile personal computer, UMPC), or a netbook that can interact with a stylus. The specific type of the electronic device is not limited in the embodiments of this application.

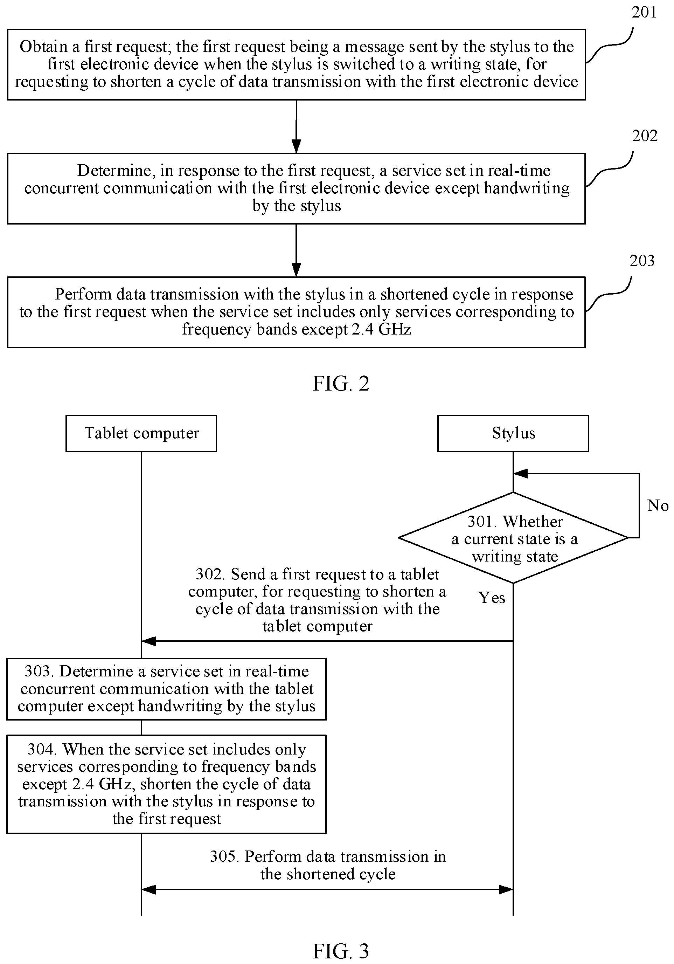

As shown in FIG. 2, in an implementation of this application, the interaction method is applied to a first electronic device that communicates with a stylus in a Bluetooth manner. The interaction method includes the following steps: 201 to 203.

201: Obtain a first request; the first request being a message sent by the stylus to the first electronic device when the stylus is switched to a writing state, for requesting to shorten a cycle of data transmission with the first electronic device.

Data transmitted by the stylus to the first electronic device includes pressure sensing data. A degree of thickness of handwriting displayed on the first electronic device is in direct proportion to the pressure sensing data from the stylus. A larger pressure indicates a larger degree of thickness of the handwriting and a smaller pressure indicates a smaller degree of thickness of the handwriting.

202: Determine, in response to the first request, a service set in real-time concurrent communication with the first electronic device except handwriting by the stylus.

203: Perform data transmission with the stylus in a shortened cycle in response to the first request when the service set includes only services corresponding to frequency bands except 2.4 GHz.

It should be noted that the mentioned service set is a set of services except writing using a stylus, and may include, for example, WiFi communication, or audio playback. The WiFi can operate in a frequency band of 2.4 GHz, or can operate in a frequency band of 5 GHz.

For example, if the service set does not include services using the frequency band of 2.4 GHz except using a stylus, for example, when the service set includes only the WiFi operating in the frequency band of 5 GHz, a preset condition is met: the service set includes only services corresponding to frequency bands except 2.4 GHz. In response to the first request, data transmission with the stylus is performed in the shortened cycle. If the stylus is provided with a pressure sensor, the stylus may obtain, by using the pressure sensor, pressure sensing data of pressing the display screen of the first electronic device by the stylus. Generally, the cycle of generation of pressure sensing data is 4 ms. In the related technology, the cycle in which the stylus transmits data to the first electronic device is 11.225 ms. In this embodiment of this application, when the preset condition is met, the first electronic device performs data transmission with the stylus in the shortened cycle.

By means of this embodiment, when the stylus is in a writing state, the stylus sends, to the first electronic device, a message for requesting to shorten a cycle of data transmission between the stylus and the first electronic device. The first electronic device determines a service set in real-time concurrent communication with the first electronic device except handwriting by the stylus, and performs data transmission with the stylus in the shortened cycle in response to the first request when the service set includes only services corresponding to frequency bands except 2.4 GHz. By shortening the data transmission cycle, the first electronic device can interact with the stylus more quickly, so that information corresponding to a stroke can be transmitted to the first electronic device in time, handwriting displayed on the display screen of the first electronic device can be optimized, and disappearance of strokes can be reduced.

As shown in FIG. 3, in an implementation of this application, the interaction method is applied to a first electronic device that communicates with a stylus in a Bluetooth manner. For ease of description, in this embodiment, the first electronic device is described by using a tablet computer as an example. It may be understood that the first electronic device may alternatively be another electronic device. In this embodiment, the interaction method includes the following steps: 301 to 305.

301: A stylus determines whether a current state is a writing state.

If a determined result is yes, step 302 is performed; and if the determined result is no, step 301 is performed.

302: The stylus sends a first request to a tablet computer, for requesting to shorten a cycle of data transmission with the tablet computer.

The first request is a message sent by the stylus to the tablet computer when the stylus is switched to the writing state, for requesting to shorten the cycle of data transmission with the tablet computer.

Data transmitted by the stylus to the tablet computer includes pressure sensing data. A degree of thickness of handwriting displayed on the tablet computer is in direct proportion to the pressure sensing data from the stylus. A larger pressure indicates a larger degree of thickness of the handwriting and a smaller pressure indicates a smaller degree of thickness of the handwriting.

303: The tablet computer determines a service set in real-time concurrent communication with the tablet computer except handwriting by the stylus.

304: When the service set includes only services corresponding to frequency bands except 2.4 GHz, the tablet computer shortens the cycle of data transmission with the stylus and performs data transmission with the stylus in the shortened cycle in response to the first request.

It should be noted that the mentioned service set is a set of services except writing using a stylus, and may include, for example, WiFi communication, or audio playback. The WiFi can operate in a frequency band of 2.4 GHz, or can operate in a frequency band of 5 GHz.

For example, if the service set does not include services using the frequency band of 2.4 GHz except using a stylus, for example, when the service set includes only the WiFi operating in the frequency band of 5 GHz, a preset condition is met: the service set includes only services corresponding to frequency bands except 2.4 GHz. In response to the first request, data transmission with the stylus is performed in the shortened cycle. If the stylus is provided with a pressure sensor, the stylus may obtain, by using the pressure sensor, pressure sensing data of pressing the display screen of the tablet computer by the stylus. Generally, the cycle of generation of pressure sensing data is 4 ms. In the related technology, the cycle in which the stylus transmits data to the tablet computer is 11.225 ms. In this embodiment of this application, when the preset condition is met, the tablet computer performs data transmission with the stylus in the shortened cycle.

305: The stylus performs data transmission with the tablet computer in the shortened cycle.

By means of this embodiment, when the stylus is in a writing state, the stylus sends, to the tablet computer, a message for requesting to shorten a cycle of data transmission between the stylus and the tablet computer. The tablet computer determines a service set in real-time concurrent communication with the tablet computer except handwriting by the stylus. When the service set includes only services corresponding to frequency bands except 2.4 GHz, the tablet computer performs data transmission with the stylus in a shortened cycle in response to the first request. By shortening the data transmission cycle, the tablet computer can interact with the stylus more quickly, so that information corresponding to a stroke can be transmitted to the tablet computer in time, handwriting displayed on the display screen of the tablet computer can be optimized, and disappearance of strokes can be reduced.

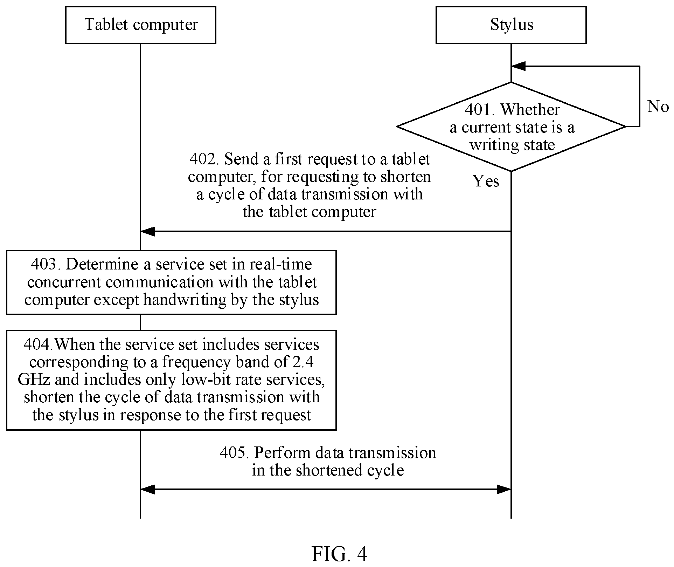

As shown in FIG. 4, in an implementation of this application, the interaction method is applied to a first electronic device that communicates with a stylus in a Bluetooth manner. For ease of description, in this embodiment, the first electronic device is described by using a tablet computer as an example. It may be understood that the first electronic device may alternatively be another electronic device. In this embodiment, the interaction method includes the following steps: 401 to 405.

401: A stylus determines whether a current state is a writing state.

If a determined result is yes, step 402 is performed; and if the determined result is no, step 401 is performed.

402: The stylus sends a first request to a tablet computer, for requesting to shorten a cycle of data transmission with the tablet computer.

The first request is a message sent by the stylus to the tablet computer when the stylus is switched to the writing state, for requesting to shorten the cycle of data transmission with the tablet computer.

Data transmitted by the stylus to the tablet computer includes pressure sensing data. A degree of thickness of handwriting displayed on the tablet computer is in direct proportion to the pressure sensing data from the stylus. A larger pressure indicates a larger degree of thickness of the handwriting and a smaller pressure indicates a smaller degree of thickness of the handwriting.

403: The tablet computer determines a service set in real-time concurrent communication with the tablet computer except handwriting by the stylus.

404: When the service set includes services corresponding to a frequency band of 2.4 GHz and includes only low-bit rate services, the tablet computer shortens the cycle of data transmission with the stylus and performs data transmission with the stylus in the shortened cycle in response to the first request.

The low-bit rate services corresponding to the frequency band of 2.4 GHz are: services having cycles of data transmission with the tablet computer using the frequency band of 2.4 GHz greater than a first preset value. The first preset value may be set according to a requirement. For example, the first preset value may be slightly less than a cycle in which a bracelet transmits obtained heart pulse information to the tablet computer at 2.4 GHz.

It should be noted that the mentioned service set is a service set except writing using a stylus, and for example, may include that a bracelet transmits heart pulsation information of a user obtained through a sensor to the tablet computer.

For example, if the service set includes transmitting the obtained heart pulse information to the tablet computer using the frequency band of 2.4 GHz, in response to the first request, data transmission with the stylus is performed in the shortened cycle.

405: The stylus performs data transmission with the tablet computer in the shortened cycle.

By means of this embodiment, when the stylus is in a writing state, the stylus sends, to the tablet computer, a message for requesting to shorten a cycle of data transmission between the stylus and the tablet computer. The tablet computer determines a service set in real-time concurrent communication with the tablet computer except handwriting by the stylus, and when the service set includes services corresponding to the frequency band of 2.4 GHz and includes only low-bit rate services, performs data transmission with the stylus in the shortened cycle in response to the first request. By shortening the data transmission cycle, the tablet computer can interact with the stylus more quickly, so that information corresponding to a stroke can be transmitted to the tablet computer in time, handwriting displayed on the display screen of the tablet computer can be optimized, and disappearance of strokes can be reduced.

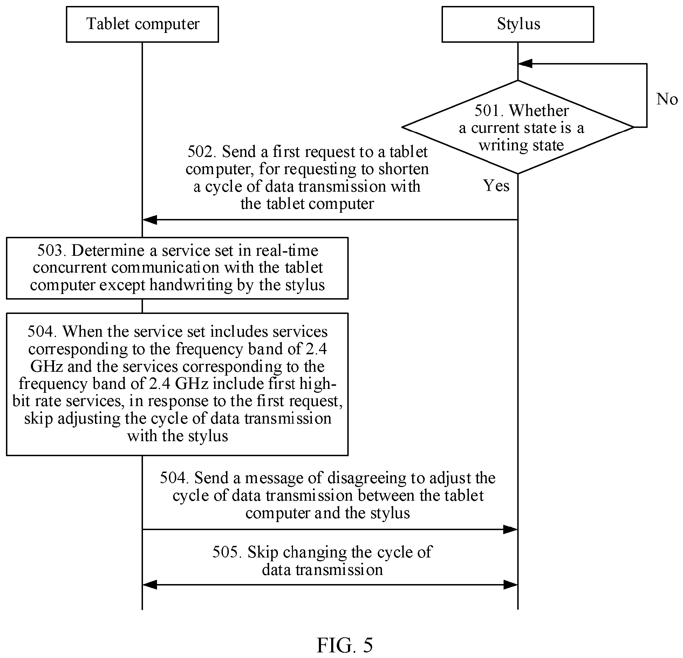

As shown in FIG. 5, in an implementation of this application, the interaction method is applied to a first electronic device that communicates with a stylus in a Bluetooth manner. For ease of description, in this embodiment, the first electronic device is described by using a tablet computer as an example. It may be understood that the first electronic device may alternatively be another electronic device. In this embodiment, the interaction method includes the following steps: 501 to 505.

501: A stylus determines whether a current state is a writing state.

If a determined result is yes, step 502 is performed; and if the determined result is no, step 501 is performed.

502: The stylus sends a first request to a tablet computer, for requesting to shorten a cycle of data transmission with the tablet computer.

The first request is a message sent by the stylus to the tablet computer when the stylus is switched to the writing state, for requesting to shorten the cycle of data transmission with the tablet computer.

Data transmitted by the stylus to the tablet computer includes pressure sensing data. A degree of thickness of handwriting displayed on the tablet computer is in direct proportion to the pressure sensing data from the stylus. A larger pressure indicates a larger degree of thickness of the handwriting and a smaller pressure indicates a smaller degree of thickness of the handwriting.

503: The tablet computer determines a service set in real-time concurrent communication with the tablet computer except handwriting by the stylus.

504: When the service set includes services corresponding to the frequency band of 2.4 GHz and the services corresponding to the frequency band of 2.4 GHz include first high-bit rate services, in response to the first request, the tablet computer does not adjust the cycle of data transmission with the stylus and sends, to the stylus, a message of disagreeing to adjust the cycle of data transmission between the tablet computer and the stylus; the first high-bit rate services being services having cycles of data transmission with the tablet computer using the frequency band of 2.4 GHz less than a second preset value and having cycles of data transmission with the tablet computer using the frequency band of 2.4 GHz being non-adjustable.

The second preset value may be set according to a requirement. For example, the second preset value may be slightly less than a cycle in which a Bluetooth headset transmits audio data to the tablet computer.

It should be noted that the mentioned service set is a set of services except writing using a stylus.

505: When the stylus and the tablet computer perform data transmission, skip changing the cycle of data transmission.

For example, if a default cycle of transmission between the stylus and the tablet computer is 11.25 ms, in this embodiment, data is continuously transmitted to the tablet computer by means of handwriting at the cycle of 11.25 ms.

By means of this embodiment, when the stylus is in a writing state, the stylus sends, to the tablet computer, a message for requesting to shorten a cycle of data transmission between the stylus and the tablet computer. The tablet computer determines a service set in real-time concurrent communication with the tablet computer except handwriting by the stylus. When the service set includes services corresponding to the frequency band of 2.4 GHz, the service set includes services corresponding to the frequency band of 2.4 GHz and the services corresponding to the frequency band of 2.4 GHz include first high-bit rate services, the tablet computer sends, in response to the first request to the stylus, a message of disagreeing to adjust the cycle of data transmission between the tablet computer and the stylus. In this embodiment, to reduce impact on the performance of the first high-bit rate services, the stylus does not change the cycle of data transmission.

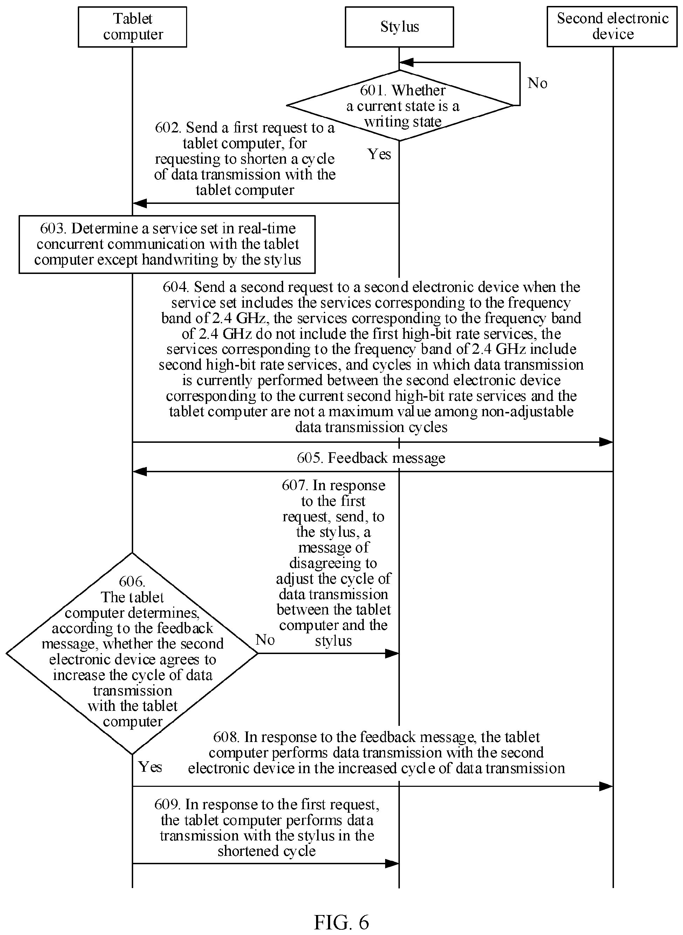

As shown in FIG. 6, in an implementation of this application, the interaction method is applied to a first electronic device that communicates with a stylus in a Bluetooth manner. For ease of description, in this embodiment, the first electronic device is described by using a tablet computer as an example. It may be understood that the first electronic device may alternatively be another electronic device. In this embodiment, the interaction method includes the following steps: 601 to 609.

601: A stylus determines whether a current state is a writing state.

If a determined result is yes, step 602 is performed; and if the determined result is no, step 601 is performed.

602: The stylus sends a first request to a tablet computer, for requesting to shorten a cycle of data transmission with the tablet computer.

The first request is a message sent by the stylus to the tablet computer when the stylus is switched to the writing state, for requesting to shorten the cycle of data transmission with the tablet computer.

Data transmitted by the stylus to the tablet computer includes pressure sensing data and data related to the cycle of data transmission that is requested to be shortened to. A degree of thickness of handwriting displayed on the tablet computer is in direct proportion to the pressure sensing data from the stylus. A larger pressure indicates a larger degree of thickness of the handwriting and a smaller pressure indicates a smaller degree of thickness of the handwriting.

603: The tablet computer determines a service set in real-time concurrent communication with the tablet computer except handwriting by the stylus.

604: Send a second request to a second electronic device when the service set includes the services corresponding to the frequency band of 2.4 GHz, the services corresponding to the frequency band of 2.4 GHz do not include the first high-bit rate services, the services corresponding to the frequency band of 2.4 GHz include second high-bit rate services, and cycles in which data transmission is currently performed between the second electronic device corresponding to the current second high-bit rate services and the tablet computer are not a maximum value among adjustable data transmission cycles.

The second request is used for requesting to increase the cycle of data transmission between the second electronic device and the tablet computer. The second high-bit rate services are: services having cycles of data transmission with the tablet computer using the frequency band of 2.4 GHz less than a third preset value and having cycles of data transmission with the tablet computer using the frequency band of 2.4 GHz being adjustable. The second high-bit rate services may include: a call service, a music playback service, a file transmission service, or the like.

605: The tablet computer obtains a feedback message sent by the second electronic device in response to the second request.

606: The tablet computer determines, according to the feedback message, whether the second electronic device agrees to increase the cycle of data transmission with the tablet computer.

If a determined result is yes, step 608 is performed; and if the determined result is no, step 607 is performed.

607: In response to the first request, send, to the stylus, a message of disagreeing to adjust the cycle of data transmission between the tablet computer and the stylus.

608: In response to the feedback message, the tablet computer performs data transmission with the second electronic device in the increased cycle of data transmission.

609: In response to the first request, the tablet computer performs data transmission with the stylus in the shortened cycle.

By means of this embodiment, when the stylus is in a writing state, the stylus sends, to the tablet computer, a message for requesting to shorten the cycle of data transmission between the stylus and the tablet computer, and the tablet computer determines a service set except writing using a stylus and in real-time concurrent communication with the tablet computer. When the service set includes services corresponding to the frequency band of 2.4 GHz, the services corresponding to the frequency band of 2.4 GHz do not include first high-bit rate services, the services corresponding to the frequency band of 2.4 GHz include second high-bit rate services, and cycles in which data transmission is currently performed between the second electronic device corresponding to the second high-bit rate services and the first electronic device are not a maximum value among adjustable data transmission cycles, a second request is sent to the second electronic device, and the tablet computer obtains a feedback message sent by the second electronic device in response to the second request. When it is determined, according to the feedback message, that the second electronic device agrees to increase the cycle of data transmission with the first electronic device, the tablet computer performs data transmission with the stylus in the shortened cycle in response to the first request. When it is determined, according to the feedback message, that the second electronic device does not agree to increase the cycle of data transmission with the first electronic device, the tablet computer sends, to the stylus in response to the first request, a message of disagreeing to adjust the cycle of data transmission between the tablet computer and the stylus. According to this embodiment, the use scenario is limited, so that the cycle of data transmission between the stylus and the electronic device is shortened and the problem of disappearance of strokes is alleviated when relatively small impact is generated on other existing services.

The embodiments of the interaction method applicable to this application are described above with reference to FIG. 1A to FIG. 6. This application further provides an electronic device. The electronic device includes one or more processors and a memory. The memory is coupled to the one or more processors. The memory is configured to store computer program code, the computer program code includes computer instructions, and the one or more processors invoke the computer instructions to cause the electronic device to perform any interaction method according to the foregoing embodiments of this application.

Specifically, an interaction method in which the electronic device serves as the first electronic device to communicate with the stylus in the Bluetooth manner includes the following steps:
obtaining a first request; the first request being a message sent by the stylus to the first electronic device when the stylus is switched to a writing state, for requesting to shorten a cycle of data transmission with the first electronic device;
determining, in response to the first request, a service set in real-time concurrent communication with the first electronic device except handwriting by the stylus; and
performing data transmission with the stylus in a shortened cycle in response to the first request when the service set includes only services corresponding to frequency bands except 2.4 GHz.

In some possible implementations, the interaction method in which the first electronic device communicates with the stylus in the Bluetooth manner further includes:
performing the data transmission with the stylus in the shortened cycle in response to the first request when the service set includes services corresponding to a frequency band of 2.4 GHz and includes only low-bit rate services; the low-bit rate services being services having cycles of data transmission with the first electronic device using the frequency band of 2.4 GHz greater than a first preset value.

In some possible implementations, the interaction method in which the first electronic device communicates with the stylus in the Bluetooth manner further includes:
sending, to the stylus in response to the first request, a message of disagreeing to adjust the cycle of data transmission between the first electronic device and the stylus when the service set includes services corresponding to the frequency band of 2.4 GHz and the services corresponding to the frequency band of 2.4 GHz include first high-bit rate services; the first high-bit rate services being services having cycles of data transmission with the first electronic device using the frequency band of 2.4 GHz less than a second preset value and having cycles of data transmission with the first electronic device using the frequency band of 2.4 GHz being non-adjustable.

In some possible implementations, the interaction method in which the first electronic device communicates with the stylus in the Bluetooth manner further includes: sending, to a second electronic device, a second request when the service set includes the services corresponding to the frequency band of 2.4 GHz, the services corresponding to the frequency band of 2.4 GHz do not include the first high-bit rate services, the services corresponding to the frequency band of 2.4 GHz include second high-bit rate services, and cycles in which data transmission is currently performed between the second electronic device corresponding to the second high-bit rate services and the first electronic device are not a maximum value among adjustable data transmission cycles, the second request being used for requesting to increase the cycle of data transmission between the second electronic device and the first electronic device; the second high-bit rate services being services having cycles of data transmission with the first electronic device less than a third preset value and having cycles of data transmission with the first electronic device using the frequency band of 2.4 GHz being adjustable.

In some possible implementations, the interaction method in which the first electronic device communicates with the stylus in the Bluetooth manner further includes: performing the data transmission with the stylus in the shortened cycle in response to the first request when a feedback message from the second electronic device in response to the second request is received and the feedback message indicates that the second electronic device agrees to increase the cycle of data transmission with the first electronic device.

In some possible implementations, the interaction method in which the first electronic device communicates with the stylus in the Bluetooth manner further includes: sending, to the stylus in response to the first request, a message of disagreeing to adjust the cycle of data transmission between the first electronic device and the stylus when a feedback message from the second electronic device in response to the second request is received and the feedback message indicates that the second electronic device does not agree to increase the cycle of data transmission with the first electronic device.

The second high-bit rate services may include: a call service, a music playback service, a file transmission service, or the like.

In some possible implementations, the shortened cycle is less than a cycle of generation of a pressure sensing signal. The cycle of generation of pressure sensing data by the stylus is approximately 4 ms. During use of the technical solution provided in this application, when a particular condition is met, the cycle in which the stylus transmits data to the electronic device may be changed to 3.75 ms.

By means of this embodiment, when the stylus is in a writing state, the stylus sends, to the first electronic device, a message for requesting to shorten a cycle of data transmission between the stylus and the first electronic device. The first electronic device determines a service set in real-time concurrent communication with the first electronic device except handwriting by the stylus, and performs data transmission with the stylus in the shortened cycle in response to the first request when the service set includes only services corresponding to frequency bands except 2.4 GHz. By shortening the data transmission cycle, the first electronic device can interact with the stylus more quickly, so that information corresponding to a stroke can be transmitted to the first electronic device in time, handwriting displayed on the display screen of the first electronic device can be optimized, and disappearance of strokes can be reduced.

This application further provides a computer program product. When the computer program product is executed by a processor, the interaction method in any method embodiment of this application is implemented.

This application further provides a computer-readable storage medium. The computer-readable storage medium includes instructions, and the instructions, when run on an electronic device, cause the electronic device to perform the interaction method in any one of the foregoing method embodiments. For specific steps of the interaction method, refer to the descriptions in the foregoing method embodiments, and details are not described herein again.

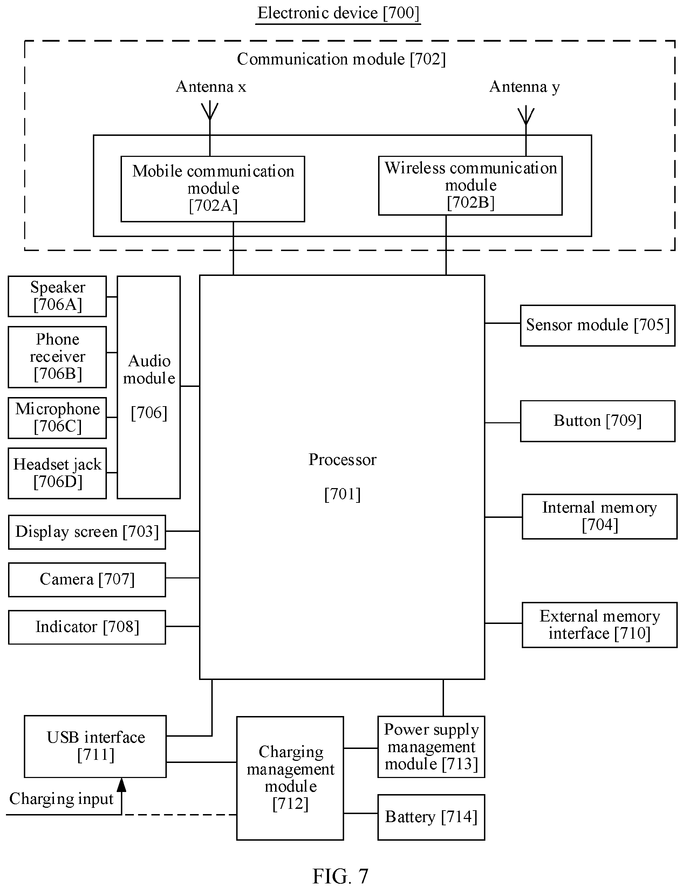

In an example, FIG. 7 is a schematic structural diagram of an electronic device 700 according to an embodiment of this application. As shown in FIG. 7, the electronic device 700 may include: a stylus (not shown), a processor 701, a communication module 702, a display screen 703, and the like.

The processor 701 may include one or more processing units. Different processing units may be independent components, or may be integrated into one or more processors 701. The controller may be a nerve center and a command center of the electronic device 700. The controller may generate an operation control signal according to instruction operation code and a timing signal, to complete the control of obtaining and executing instructions. A memory may be further disposed in the processor 701, and is configured to store instructions and data.

In some embodiments, the processor 701 may include one or more interfaces. The interface may include an integrated circuit interface, an inter-integrated circuit sound interface, a pulse code modulation interface, a universal asynchronous receiver/transmitter interface, a mobile industry processor interface, a general-purpose input/output interface, a subscriber identification module interface, a universal serial bus interface 711, and/or the like.

The electronic device 700 may implement a display function through the GPU, the display screen 703, the application processor 701, and the like. The GPU is a microprocessor for image processing, and connects the display screen 703 and the application processor 701. The GPU is configured to perform mathematical and geometric calculation for graphic rendering. The processor 701 may include one or more GPUs that execute program instructions to generate or change display information. The display screen 703 is configured to display an image, a video stream, and the like. The communication module 702 may include an antenna x, an antenna y, and a mobile communication module 702A, and/or a wireless communication module 702B. For example, the communication module 702 includes the antenna x, the antenna y, the mobile communication module 702A, and the wireless communication module 702B. In addition, a receiving module provided in the embodiments of this application may alternatively be disposed in the communication module 702.

A wireless communication function of the electronic device 700 may be implemented by using the antenna x, the antenna y, the mobile communication module 702A, the wireless communication module 702B, the modem processor, the baseband processor, and the like.

The mobile communication module 702A may provide a wireless communication solution that is applied to the electronic device 700 and that includes 2G/3G/4G/5G. The mobile communication module 702A may include at least one filter, a switch, a power amplifier, a low noise amplifier (low noise amplifier, LNA), and the like. The mobile communication module 702A may receive an electromagnetic wave through the antenna x, perform processing such as filtering and amplification on the received electromagnetic wave, and transmit the processed electromagnetic wave to the modem processor for demodulation. The mobile communication module 702A may further amplify a signal obtained after modulation by the modem, and convert the amplified signal into an electromagnetic wave by the antenna x for radiation. In some embodiments, at least some functional modules of the mobile communication module 702A may be disposed in the processor 701. In some embodiments, at least some functional modules of the mobile communication module 702A and at least some modules of the processor 701 may be disposed in a same device.

The application processor outputs a sound signal through an audio device (which is not limited to a speaker 706A, a phone receiver 706B, or the like), or displays an image or a video stream through the display screen 703. In some embodiments, the modem processor may be an independent device. In some other embodiments, the modem processor may be independent of the processor 701, and is disposed in a same device as the mobile communication module 702A or another functional module.

The wireless communication module 702B may provide a solution, applied to the electronic device 700, to wireless communication. The wireless communication module 702B may be one or more components integrating at least one communication processing module. The wireless communication module 702B receives an electromagnetic wave through the antenna y, performs frequency modulation and filtering processing on the electromagnetic wave signal, and transmits a processed signal to the processor 701. The wireless communication module 702B may further receive a to-be-transmitted signal from the processor 701, perform frequency modulation and amplification on the to-be-transmitted signal, and convert the to-be-transmitted signal into an electromagnetic wave through the antenna y for radiation.

The antenna x and the mobile communication module 702A of the electronic device 700 are coupled, and the antenna y and the wireless communication module 702B are coupled, so that the electronic device 700 can communicate with a network and another device by using a wireless communications technology.

The electronic device 700 may include an external memory interface 710, an internal memory 704, a universal serial bus (universal serial bus, USB) interface 711, a charging management module 712, a power supply management module 713, a battery 714, an audio module 706, a speaker 706A, a phone receiver 706B, a microphone 706C, a headset jack 706D, a sensor module 705, a button 709, a motor, an indicator 708, a camera 707, a subscriber identification module (subscriber identification module, SIM) card interface, and the like. The electronic device 700 may implement an audio function by using the audio module 706, the speaker 706A, the phone receiver 706B, the microphone 706C, the headset jack 706D, the application processor 701, and the like, for example, music playback and recording. The sensor module 705 in the electronic device 700 may implement sensing and/or acquisition functions for different signals.

The electronic device provided in this embodiment of this application is described above. It should be understood that an example structure in this embodiment does not constitute a specific limitation on the electronic device 700. In some other embodiments, the electronic device 700 may include more or fewer components than those shown in the figure, or some merged components, or some split components, or different component arrangements. The components shown in the figure may be implemented by using hardware, software, or a combination of software and hardware.

The electronic device, the computer-readable storage medium, the computer program product, and the chip provided in this embodiment may be configured to perform the corresponding method provided above. Therefore, for beneficial effects that can be achieved by them, refer to the beneficial effects of the corresponding method provided above. Details are not described herein again.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. Moreover, mutual couplings or direct couplings or communication connections shown or discussed may be indirect couplings or communication connections through some interfaces, apparatuses or units. The changed units may or may not be physically separated. A part displayed as a unit may be one physical unit or a plurality of physical units, that is, may be located at one position or may be distributed at different positions. Some or all of the units may be selected according to actual needs to achieve the objective of the solution of this embodiment.

In addition, functional units in the embodiments of this application may be integrated into one processing unit, or each unit may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the method described in embodiments of this application. The above storage medium includes: any medium that can store program code, such as a USB flash drive, a removable hard disk, a read-only memory (read only memory, ROM), a random access memory (random access memory, RAM), a magnetic disk, or an optical disc.

The foregoing descriptions are merely specific implementations of this application, and are not intended to limit the protection scope of the application. Any variation or replacement readily figured out by a person skilled in the art within the technical scope disclosed in this application shall fall within the protection scope of this application. Therefore, the protection scope of this application shall be subject to the protection scope of the claims.

## Claims

1. An interaction method, applied to a first electronic device that communicates with a stylus in a Bluetooth manner, the method comprising:
obtaining a first request; the first request being a message sent by the stylus to the first electronic device when the stylus is switched to a writing state, for requesting to shorten a cycle of data transmission with the first electronic device;
determining, in response to the first request, a service set in real-time concurrent communication with the first electronic device except handwriting by the stylus; and
performing data transmission with the stylus in a shortened cycle in response to the first request when the service set comprises only services corresponding to frequency bands except 2.4 GHz.

2. The method according to claim 1, wherein the method further comprises:
performing the data transmission with the stylus in the shortened cycle in response to the first request when the service set comprises services corresponding to a frequency band of 2.4 GHz and comprises only low-bit rate services; the low-bit rate services being services having cycles of data transmission with the first electronic device using the frequency band of 2.4 GHz greater than a first preset value.

3. The method according to claim 1, wherein the method further comprises:
sending, to the stylus in response to the first request, a message of disagreeing to adjust the cycle of data transmission between the first electronic device and the stylus when the service set comprises services corresponding to the frequency band of 2.4 GHz and the services corresponding to the frequency band of 2.4 GHz comprise first high-bit rate services; the first high-bit rate services being services having cycles of data transmission with the first electronic device using the frequency band of 2.4 GHz less than a second preset value and having cycles of data transmission with the first electronic device using the frequency band of 2.4 GHz being non-adjustable.

4. The method according to claim 3, wherein the method further comprises:
sending, to a second electronic device, a second request when the service set comprises the services corresponding to the frequency band of 2.4 GHz, the services corresponding to the frequency band of 2.4 GHz do not comprise the first high-bit rate services, the services corresponding to the frequency band of 2.4 GHz comprise second high-bit rate services, and cycles in which data transmission is currently performed between the second electronic device corresponding to the second high-bit rate services and the first electronic device are not a maximum value among adjustable data transmission cycles, the second request being used for requesting to increase the cycle of data transmission between the second electronic device and the first electronic device; the second high-bit rate services being services having cycles of data transmission with the first electronic device less than a third preset value and having cycles of data transmission with the first electronic device using the frequency band of 2.4 GHz being adjustable.

5. The method according to claim 4, wherein the method further comprises:
performing the data transmission with the stylus in the shortened cycle in response to the first request when a feedback message from the second electronic device in response to the second request is received and the feedback message indicates that the second electronic device agrees to increase the cycle of data transmission with the first electronic device.

6. The method according to claim 4, wherein the method further comprises:
sending, to the stylus in response to the first request, a message of disagreeing to adjust the cycle of data transmission between the first electronic device and the stylus when a feedback message from the second electronic device in response to the second request is received and the feedback message indicates that the second electronic device does not agree to increase the cycle of data transmission with the first electronic device.

7. The method according to any one of claims 4 to 6, wherein the second high-bit rate services comprise: a call service, a music playback service, or a file transmission service.

8. The method according to any one of claims 1 to 6, wherein the shortened cycle is smaller than a cycle of generation of a pressure sensing signal.

9. An electronic device, wherein the electronic device comprises: one or more processors and a memory; and
the memory is coupled to the one or more processors, the memory is configured to store computer program code, the computer program code comprises computer instructions, and the one or more processors invoke the computer instructions to enable the electronic device to perform the interaction method according to any one of claims 1 to 8.

10. A computer-readable storage medium, wherein the computer-readable storage medium comprises instructions, and the instructions, when run on an electronic device, cause the electronic device to perform the interaction method according to any one of claims 1 to 8.
